# EUROPÄISCHE PATENTANMELDUNG

(11) **EP 4 644 215 A1**
(43) Veröffentlichungstag der Anmeldung: **05.11.2025**
(21) Anmeldenummer: 25174079.1
(22) Anmeldetag: 02.05.2025
(51) Int. Cl.: B62D 33/04, B62D 63/02

(54) **BAUSATZ FÜR LADERÄUME VON NUTZFAHRZEUGEN**

(30) Priorität: 02.05.2024 DE 102024112378
(71) Anmelder: CubicCube GmbH, 76287 Rheinstetten (DE)
(72) Erfinder: Zawisla, Andreas Roman, 76137 Karlsruhe (DE); Rittmann, Frank, 76189 Karlsruhe (DE)
(74) Vertreter: Mertzlufft-Paufler, Cornelius

(57) **Zusammenfassung**

Die Erfindung betrifft insbesondere einen Bausatz für eine erste und eine zweite Variante von Aufbauten (1a, 1b) für Laderäume (4) von Nutzfahrzeugen (5), wobei in beiden Varianten der jeweilige Aufbau (1a, 1b) auf einem eine Fahrerkabine (3) aufweisenden Fahrgestell (2) so montierbar ist, dass ein geschlossener Laderaum (4) ausgebildet wird (vgl. Fig. 1).

## Beschreibung

Die Erfindung betrifft einen Bausatz für mindestens eine erste und eine zweite Variante von Aufbauten für Laderäume von Nutzfahrzeugen. Ein derartiger Bausatz ist in der Praxis bekannt.

Die Erfindung betrifft weiter eine Baureihe von Aufbauten für Laderäume von Nutzfahrzeugen in einer ersten und einer zweiten Variante. Eine solche Baureihe ist in der Praxis bekannt.

Die Erfindung betrifft weiter die Montage eines Aufbaus, der auf Basis eines Bausatzes zusammengesetzt wird und der auf dem Fahrgestell eines Nutzfahrzeugs montiert wird und einen geschlossenen auf die Maße des Nutzfahrzeugs angepassten Laderaum ausbildet. Solche Verfahren sind in der Praxis bekannt.

Der Erfindung liegt die Aufgabe zugrunde, die Kosten sowie die Komplexität der Montage von Laderäumen für Nutzfahrzeuge zu reduzieren.

Zur Lösung dieser Aufgabe schlägt die Erfindung die Merkmale von Anspruch 1 vor. Insbesondere wird somit erfindungsgemäß bei einem Bausatz der eingangs beschriebenen Art vorgeschlagen, dass in beiden der zwei Varianten der jeweilige Aufbau auf einem eine Fahrerkabine aufweisenden Fahrgestell so montierbar ist, dass ein geschlossener Laderaum ausgebildet wird. Unter einem "geschlossenen Laderaum" kann hierbei insbesondere verstanden werden, dass der Laderaum vor äußeren Wettereinflüssen geschützt ist, insbesondere Feuchtigkeit.

Der Bausatz umfasst Module, die wiederum mehrere Grundmodule und wenigstens ein Zwischenmodul umfassen. Die Zwischenmodule sind dafür vorgesehen, dass sie zwischen den Grundmodulen platziert werden, damit der Laderaum in Längsrichtung vergrößert werden kann. So kann mit dem erfindungsgemäßen Bausatz auf vielen unterschiedlich langen Fahrgestellen ein passender Aufbau montiert werden.

Es kann vorgesehen sein, dass mindestens eines der Module eine verschließbare Zugangsmöglichkeit in die Kabine aufweist, bevorzugt in Form einer Tür und/oder eines Rollladens.

In der ersten Variante des Aufbaus sind die mehreren Grundmodule in einer Längsrichtung hintereinander anordenbar, wobei bezogen auf die Längsrichtung benachbarte Module jeweils so miteinander fest verbindbar sind, dass die mehreren Grundmodule eine seitlich und rückseitig umlaufende Wandung der ersten Variante des Aufbaus bilden. Die Seitenwände und dir Heckwand des Laderaums werden also durch diese Wandung gebildet.

Der Aufbau hat bevorzugt eine Vorderwand. In diesem Fall kann der Aufbau einen separaten Koffer ausbilden, der von der Fahrerkabine getrennt auf dem Fahrgestell befestigt sein kann. Zwischen der Vorderwand des Aufbaus und einer Rückwand der Fahrerkabine kann ein Spalt ausgebildet sein.

Eine Vorderwand des Aufbaus ist nicht zwingend erforderlich. Der Aufbau kann vielmehr auch nach vorne hin offen sein. In diesem Fall sind die Seitenwände des Aufbaus bevorzugt direkt an der Fahrerkabine befestigt, sodass kein Spalt verbleibt. Eine Rückwand der Fahrerkabine kann auch in diesem Fall weiterhin vorhanden sein, sodass die Rückwand der Fahrerkabine als Vorderwand des Laderaums genutzt werden kann; eine Rückwand der Fahrerkabine kann jedoch auch weggelassen werden, sodass die Fahrerkabine heckseitig offen ist. In ersten Fall ist der Laderaum vom Kabinenraum getrennt, im zweiten Fall bilden der Laderaum und die Fahrerkabine einen gemeinsamen Raum aus.

Vorzugsweise sind die Module miteinander verrastbar, um das Verbinden zu vereinfachen. Die Module können auch miteinander verschraubbar sein oder anderweitig miteinander verbunden werden.

Zum verbesserten Verbinden der Module miteinander können diese endseitig jeweils Umbördelungen aufweisen, die flächig aneinander anliegen können und miteinander durch Befestigungsmittel wie etwa Schrauben verbunden werden können.

Zwischen nebeneinander angeordneten Modulen können sich Fugen ausbilden. Diese können mit einem Dichtmaterial abgedichtet werden. Als Dichtmaterial kommt beispielsweise ein witterungsbeständiger vorzugsweise primerloser Klebewerkstoff in Betracht.

Bei der ersten Variante des Aufbaus umfassen die mehreren Grundmodule ein erstes Grundmodul und ein zweites Grundmodul, die direkt benachbart sind. Bei dieser Variante wird somit kein Zwischenmodul verwendet, wodurch die Länge des Aufbaus klein gehalten und auf die Länge des Fahrgestells angepasst werden kann.

In der zweiten Variante des Aufbaus sind die mehreren Grundmodule und wenigstens ein Zwischenmodul in einer Längsrichtung hintereinander anordenbar, wobei benachbarte der Module jeweils so miteinander fest verbindbar sind, dass die mehreren Grundmodule und das wenigstens eine Zwischenmodul eine seitlich und rückseitig umlaufende Wandung der zweiten Variante des Aufbaus bilden. Auch bei dieser zweiten Variante umfassen die mehreren Grundmodule ein erstes Grundmodul und ein zweites Grundmodul. Das wenigstens eine Zwischenmodul ist zwischen dem ersten Grundmodul und dem zweiten Grundmodul angeordnet.

Bei der zweiten Variante des Aufbaus dient das wenigstens eine Zwischenmodul dazu, den durch den zweiten Aufbau definierten Laderaum in der Längsrichtung zu vergrößern.

Bei einer vorteilhaften Ausgestaltung kann vorgesehen sein, dass die Module in sich formstabil ausgestaltet sind. Dies hat den Vorteil, dass die Montage der einzelnen Module erleichtert wird.

Bei einer weiteren vorteilhaften Ausgestaltung kann vorgesehen sein, dass das jeweilige Modul einen Abschnitt eines Bodens und einen Abschnitt einer linken und einer rechten Seitenwand des späteren Laderaums ausbildet.

Ein einzelnes Modul muss also nicht zwingend in sich geschlossen ausgestaltet sein. Beispielsweise kann ein Grundmodul oder ein Zwischenmodul einen U-förmigen Querschnitt aufweisen und somit nur einen Teil des Bodens und einen Teil der linken und rechten Seitenwand ausbilden.

Vorzugsweise ist der Abschnitt des Bodens fest auf dem Fahrgestell montierbar. Dies erleichtert die Montage.

Alternativ oder zusätzlich ist das jeweilige Modul oberseitig offen gehalten und ein Deckenmodul ist mit dem jeweiligen Modul so zusammensetzbar, dass eine umlaufende in sich geschlossene Innenwandung des späteren Laderaums abschnittsweise ausbildbar ist. Wird ein solches U-förmiges Modul mit einem Deckenmodul verbunden, kann ein Modul erhalten werden, welches um die Längsachse geschlossen umlaufend bzw. ringförmig oder O-förmig ausgestaltet ist und somit eine hohe Formstabilität aufweist. Dies bietet außerdem den Vorteil, dass die Deckenhöhe durch die Verwendung unterschiedlich hoher Deckenmodule variabel angepasst werden kann.

Besonders bevorzugt ist das jeweilige Modul vorder- und/oder rückseitig offen gehalten. Dadurch kann dieses Modul mit anderen Modulen verbunden werden und die verbundenen Module können gemeinsam einen geschlossenen Laderaum bilden.

Bei einer weiteren vorteilhaften Ausgestaltung kann vorgesehen sein, dass das jeweilige Modul einen Abschnitt eines Dachs und einen Abschnitt einer linken und einer rechten Seitenwand des späteren Laderaums ausbildet. Dadurch kann das jeweilige Modul auf einem Boden des späteren Laderaums aufgebaut werden.

Beispielsweise kann ein Grundmodul oder ein Zwischenmodul einen U-förmigen Querschnitt aufweisen und somit einen Teil des Dachs und einen Teil der linken und rechten Seitenwand ausbilden. Bei einer weiteren vorteilhaften Ausgestaltung kann vorgesehen sein, dass bei der ersten Variante und alternativ oder zusätzlich bei der zweiten Variante des Aufbaus einige oder alle der Module, die den späteren Laderaum ausbilden, so aneinander anliegen, dass sie aneinander anschließen und/oder dass keine Zwischenspalte zwischen den Modulen vorhanden sind. Hierdurch kann der Aufbau besonders leicht montiert werden und es kann auf weitere Bauteile, die etwaige Zwischenräume zwischen den Modulen füllen müssten, verzichtet werden.

Bei einer weiteren vorteilhaften Ausgestaltung kann vorgesehen sein, dass Flächenelemente eines der Module, insbesondere eines der Grundmodule und/oder des Zwischenmoduls, zueinander versatzfrei ausgebildet sind. Die Flächenelemente können hierbei sein: Eine oder zwei Seitenwände, ein Dach und/oder ein Boden. Bevorzugt sind alle Flächenelemente des Moduls zueinander versatzfrei ausgebildet. Bevorzugt sind die Flächenelemente mehreren oder jedes der Module jeweils versatzfrei ausgebildet. Bevorzugt haben die Flächenelemente entlang einer Längsrichtung des Nutzfahrzeug eine gleiche Länge. In diesem Fall gibt weder nach vorne noch nach hinten einen Versatz. Versatzfrei kann bedeuten, dass entlang einer Richtung des Nutzfahrzeugs das Modul so lang ist wie jedes seiner seitlich, oben und/oder unten angeordneten Flächenelemente.

Bei einer weiteren vorteilhaften Ausgestaltung kann vorgesehen sein, dass bei der ersten Variante, bei der zweiten Variante oder bei beiden Varianten des Aufbaus eine Vorderseite der Wandung offen gehalten ist. Dadurch kann als Vorderseite der Wandung eine eventuell vorhandene Heckwand der Fahrerkabine genutzt werden. Alternativ oder zusätzlich kann vorgesehen sein, dass der jeweilige Aufbau jeweils ein, vorzugsweise baugleiches, Heckwandmodul aufweist, welches eine rückseitige Heckwand des jeweiligen Aufbaus ausbildet. Durch ein derartiges Heckwandmodul kann der jeweilige Aufbau rückseitig abgeschlossen werden.

Bei einer weiteren vorteilhaften Ausgestaltung kann vorgesehen sein, dass bei der ersten Variante, bei der zweiten Variante oder bei beiden Varianten des Aufbaus ein vorderes der Module eine geschlossene Vorderseite der Wandung ausbildet. Vorzugsweise handelt es sich bei diesem Modul um ein erstes Grundmodul. Dies hat den Vorteil, dass der resultierende Aufbau eine eigene vorderseitige Wandung besitzen kann. Damit ist der Aufbau unabhängig von einer eventuell vorhandenen Rückwand der Fahrerkabine vorderseitig abgeschlossen.

Bei einer weiteren vorteilhaften Ausgestaltung kann vorgesehen sein, dass wenigstens eines der Module einen geschlossen umlaufenden Abschnitt einer Innenwandung des späteren Laderaums ausbildet. Ein solches Modul kann also nach wie vor vorne und/oder hinten geöffnet, aber um die Längsachse herum ringförmig ausgestaltet sein. Dies ermöglicht eine hohe Formstabilität und erleichtert die Montage. Außerdem wird für ein derartiges Modul kein zusätzliches Deckenmodul benötigt.

Bei einer weiteren vorteilhaften Ausgestaltung kann vorgesehen sein, dass der Bausatz ein oder mehrere Deckenmodule aufweist, die miteinander und mit den Grundmodulen so miteinander fest verbindbar sind, dass die Deckenmodule ein Dach des Aufbaus in der ersten Variante bilden. Alternativ oder zusätzlich sind die Deckenmodule mit dem wenigstens einen Zwischenmodul so miteinander fest verbindbar, dass die Deckenmodule ein Dach des Aufbaus in der zweiten Variante bilden.

Das Dach schließt dabei den Laderaum nach oben hin ab. Das Dach kann aber auch Lüftungsöffnungen oder Fenster aufweisen, um zumindest zeitweise den Laderaum belüften zu können. Dank einer Auswahl an verschiedenen Deckenmodulen kann die Höhe des jeweiligen Aufbaus variabel ausgestaltet und den jeweiligen Erfordernissen angepasst werden.

Bevorzugt sind die Grundmodule und/oder das wenigstens eine Zwischenmodul oberseitig offen gehalten. Dies hat den Vorteil, dass je nach angebrachten Deckenmodulen der Innenraum des Aufbaus in der Höhe veränderbar ist.

Bei einer weiteren vorteilhaften Ausgestaltung kann vorgesehen sein, dass der Bausatz wenigstens ein Modul aufweist, welches in Sandwichbauweise ausgeführt ist. Bevorzugt weist das Modul wenigstens zwei Schichten glasfaserverstärkten Kunststoff (GFK) und wenigstens eine Schicht Polyethylen-(PE)-Schaumstoff auf. Diese Sandwichbauweise hat den Vorteil eines geringen Gewichts, wodurch die Montage erleichtert wird.

Bei einer weiteren vorteilhaften Ausgestaltung kann vorgesehen sein, dass im jeweiligen Aufbau die miteinander verbundenen direkt benachbarten der Module jeweils an ihrer jeweiligen Unterseite plan miteinander abschließen, insbesondere ohne Stufen. Bevorzugt ist die jeweilige Unterseite des jeweiligen Moduls, also insbesondere des jeweiligen Grundmoduls und/oder des wenigstens einen Zwischenmoduls, so flach ausgebildet, dass alle Unterseiten der in einem der Aufbauten verwendeten Module in einer gemeinsamen Ebene liegen.

Vorteilhaft an dieser Ausführung ist, dass sämtliche verwendete Grund- und Zwischenmodule oberhalb des Fahrrahmens platziert sind. Damit ist unterhalb des Fahrrahmens Platz für das Anbringen weiterer Module oder von Behältern.

Bei einer weiteren vorteilhaften Ausgestaltung kann vorgesehen sein, dass der Bausatz wenigstens ein Behältermodul umfasst, das als Vorratsbehälter dienen kann, um ein Reinigungsmedium wie beispielsweise Wasser außerhalb des Laderaums aufzubewahren. Hierbei ist das wenigstens eine Behältermodul über eine zum Bausatz gehörende Medienleitung fluidisch mit dem Laderaum verbindbar.

Ein solches Behältermodul kann zum Beispiel für Reinigungsfahrzeuge nützlich sein. Bevorzugt kann in einem solchen Fall der Aufbau einen Anschluss für den Vorratsbehälter aufweisen, zum Beispiel eine Schlauchkupplung.

Bei einer weiteren vorteilhaften Ausgestaltung kann vorgesehen sein, dass der Bausatz wenigstens einen Befestigungsadapter umfasst, wobei der Befestigungsadapter einen Rahmen ausbildet, mit Hilfe dessen der jeweilige Aufbau auf einem Fahrgestell eines Nutzfahrzeugs montierbar ist. Ein derartiger Befestigungsadapter kann dazu verwendet werden, um die verwendeten Module auf einer Vielzahl von unterschiedlichen Fahrgestellen anzubringen.

Bevorzugt ist der Befestigungsadapter für eine zerstörungsfrei lösbare mechanische Verbindung, insbesondere eine Schraubverbindung, mit einem Fahrgestell vorgesehen und entsprechend ausgestaltet. So kann der Aufbau mit vergleichsweise geringem Aufwand von dem Fahrgestell gelöst werden.

Alternativ oder zusätzlich sind zur Lösung der genannten Aufgabe erfindungsgemäß die Merkmale des auf eine Baureihe von Aufbauten für Laderäume von Nutzfahrzeugen gerichteten nebengeordneten Anspruchs vorgesehen. Insbesondere wird zur Lösung der genannten Aufgabe somit erfindungsgemäß bei einer Baureihe der eingangs beschriebenen Art vorgeschlagen, dass die Aufbauten in einer ersten und einer zweiten Variante mit der oben beschriebenen Erfindung hergestellt werden.

Die Aufbauten können jeweils als Koffer, Kasten und/oder als Teil einer Karosserie ausgebildet sein. Entsprechend kann es sich bei dem Nutzfahrzeug bevorzugt um einen Lastkraftwagen oder um einen Kastenwagen handeln. Entsprechend kann auch der zuvor beschriebene Bausatz für solche Aufbauten vorgesehen und ausgebildet sein.

Alternativ oder zusätzlich sind zur Lösung der genannten Aufgabe erfindungsgemäß die Merkmale des auf eine Montage eines Aufbaus gerichteten nebengeordneten Anspruchs vorgesehen. Insbesondere wird zur Lösung der genannten Aufgabe somit erfindungsgemäß bei einer Montage der eingangs beschriebenen Art vorgeschlagen, dass die oben beschriebene Erfindung zum Zusammensetzen eines Aufbaus genutzt wird, der auf dem Fahrgestell eines Nutzfahrzeugs montiert wird und einen geschlossenen auf die Maße des Nutzfahrzeugs angepassten Laderaum ausbildet.

Die Aufbauten können dabei erst während der Montage auf dem Fahrgestell zusammengesetzt werden. Alternativ kann der Aufbau auch fertig montiert auf das Fahrgestell gehoben und dort mit dem Fahrgestell fest und sicher verbunden werden. Somit ist eine große Flexibilität während der Montage gegeben.

Vorzugsweise wird das Nutzfahrzeug- für die Rohrreinigung-, bildgestützte elektronische Rohrinspektion, Druckprüfung und/oder Rohrsanierung eingesetzt. Das Nutzfahrzeug kann dabei als Spülwagen und/oder als Inspektionswagen eingesetzt werden.

Alternativ oder zusätzlich sind zur Lösung der genannten Aufgabe erfindungsgemäß die Merkmale des auf ein Verfahren zur Montage eines Aufbaus gerichteten nebengeordneten Anspruchs vorgesehen. Insbesondere wird zur Lösung der genannten Aufgabe somit erfindungsgemäß bei einem Verfahren zur Montage eines Aufbaus der eingangs beschriebenen Art vorgeschlagen, dass der oben beschriebene Bausatz zum Zusammensetzen eines Aufbaus genutzt wird und auf einem Fahrgestell eines Nutzfahrzeugs montiert wird und zumindest im montierten Zustand einen geschlossenen auf die Maße des Nutzfahrzeugs angepassten Laderaum ausbildet.

Bevorzugt wird wenigstens ein Befestigungsadapter auf dem Fahrgestell verschraubt, damit die Montierbarkeit des Aufbaus verbessert werden kann. Bei dem Befestigungsadapter kann es sich um ein eigenständiges Bauteil oder auch um einen Teil eines Moduls handeln. Nachfolgend wird der bereits fertig assemblierte Aufbau oder ein einzelnes Modul des Aufbaus mit dem Befestigungsadapter fest verbunden, vorzugsweise verschraubt. Schraubverbindungen haben den Vorteil einer einfachen Montage.

Weiter bevorzugt werden alternativ oder zusätzlich die Module des Aufbaus über Rastverbindungen miteinander mechanisch verbunden. Rastverbindungen bieten eine hohe Formstabilität.

Bei einer vorteilhaften Ausführung kann vorgesehen sein, dass einzelne Module nacheinander mit dem Fahrgestell oder einem Befestigungsadapter, beispielsweise dem zuvor genannten Befestigungsadapter, fest verbunden, vorzugsweise verschraubt, werden. Dadurch kann die Montage erleichtert werden, da jeweils nur ein einzelnes Modul auf dem Fahrgestell und/oder dem Befestigungsadapter montiert wird.

Alternativ oder zusätzlich kann vorgesehen sein, dass einzelne Module zusammenmontiert mit dem Fahrgestell oder einem Befestigungsadapter, beispielsweise dem zuvor genannten Befestigungsadapter, fest verbunden, vorzugsweise verschraubt, werden. "Zusammenmontiert" bedeutet, dass die Module miteinander bereits fest verbunden, beispielsweise verrastet, sind. Auf diese Weise können zwei oder mehr Module gleichzeitig auf dem Fahrgestell und/oder dem Befestigungsadapter montiert werden.

Alternativ oder zusätzlich sind zu Lösung der genannten Aufgabe erfindungsgemäß die Merkmale des auf ein Nutzfahrzeug mit einem Aufbau gerichteten nebengeordneten Anspruchs vorgesehen. Insbesondere wird zur Lösung der genannten Aufgabe somit erfindungsgemäß bei einem Nutzfahrzeug der eingangs beschriebenen Art vorgeschlagen, dass mittels des Aufbaus ein geschlossener Laderaum ausgebildet ist und der Aufbau auf einem Fahrgestell des Nutzfahrzeugs montiert ist. Der Aufbau ist hierbei mithilfe eines oben beschriebenen Bausatzes zusammengesetzt.

Bevorzugt ragt der Aufbau oder wenigstens ein einzelnes Modul des Aufbaus seitlich über das Fahrgestell hinaus. Durch diese Ausführung kann der Aufbau in Querrichtung größer ausgestaltet werden.

Besonders bevorzugt ragt der Aufbau oder wenigstens ein einzelnes Modul des Aufbaus in das Fahrgestell hinein oder, vorzugsweise außenseitig, unter das Fahrgestell. Dies hat den Vorteil, dass der Freiraum zwischen den Profilen des Fahrgestells genutzt werden kann, um den Innenraum des Aufbaus zu vergrößern.

Bei einer vorteilhaften Ausgestaltung kann vorgesehen sein, dass das Nutzfahrzeug eine Vorrichtung umfasst, die zur Rohrreinigung, Rohrinspektion, Druckprüfung und/oder Rohrsanierung ausgestaltet ist und zumindest teilweise innerhalb des Laderaums angeordnet ist. So kann das Nutzfahrzeug für die genannten Zwecke eingesetzt werden.

Vorzugsweise ist außerhalb des Laderaums wenigstens ein Vorratsbehälter angeordnet, über den die Vorrichtung mit einem Reinigungsmedium wie beispielsweise Wasser versorgbar ist. Das Reinigungsmedium kann für die Rohrreinigung verwendet werden. Vorzugsweise kann der Aufbau eine Schlauchhaspel aufweisen, wobei der Schlauch mittels einer Schlauchkupplung mit dem Vorratsbehälter verbunden sein kann.

Bevorzugt ist der wenigstens eine Vorratsbehälter unterhalb einer Unterseite des Aufbaus angeordnet. Besonders bevorzugt ist der wenigstens eine Vorratsbehälter innerhalb des Fahrgestells oder seitlich davon angeordnet. Auf diese Weisen kann der Platz unter-, innerhalb oder seitlich des Fahrgestells optimal genutzt werden.

Alternativ oder zusätzlich sind zur Lösung der genannten Aufgabe erfindungsgemäß die Merkmale des auf eine Serie von wenigstens zwei unterschiedlichen Nutzfahrzeugen, die unterschiedliche Fahrgestelle und/oder unterschiedliche Fahrerkabinen aufweisen, gerichteten nebengeordneten Anspruchs vorgesehen. Insbesondere wird zur Lösung der genannten Aufgabe somit erfindungsgemäß bei einer Serie der eingangs beschriebenen Art vorgeschlagen, dass jedes der Nutzfahrzeuge der Serie gemäß einem der auf ein Nutzfahrzeug gerichteten Ansprüche ausgestaltet ist.

Die Erfindung wird nun anhand einiger weniger Ausführungsbeispiele näher beschrieben, ist jedoch nicht auf diese wenigen Ausführungsbeispiele beschränkt. Weitere Erfindungsvarianten und Ausführungsbeispiele ergeben sich durch Kombination der Merkmale einzelner oder mehrerer Schutzansprüche untereinander und/oder mit einzelnen oder mehreren Merkmalen der Ausführungsbeispiele und/oder der zuvor beschriebenen Varianten erfindungsgemäßer Vorrichtungen und Verfahren.

Bei der nachfolgenden Beschreibung erhalten in ihrer Funktion übereinstimmende Elemente auch bei abweichender Gestaltung oder Formgebung übereinstimmende Bezugszahlen.

Es zeigt:
- Fig. 1: einen Aufbau 1a in einer ersten Variante für einen Laderaum 4 eines Nutzfahrzeugs 5, hergestellt mit einem erfindungsgemäßen Bausatz,
- Fig. 2: einen Aufbau 1b in einer zweiten Variante für einen Laderaum 4 eines Nutzfahrzeugs 5, hergestellt mit einem erfindungsgemäßen Bausatz,
- Fig. 3: einen erfindungsgemäßen Befestigungsadapter 16,
- Fig. 4: ein Nutzfahrzeug 5, auf dem ein Befestigungsadapter 16 montiert ist.

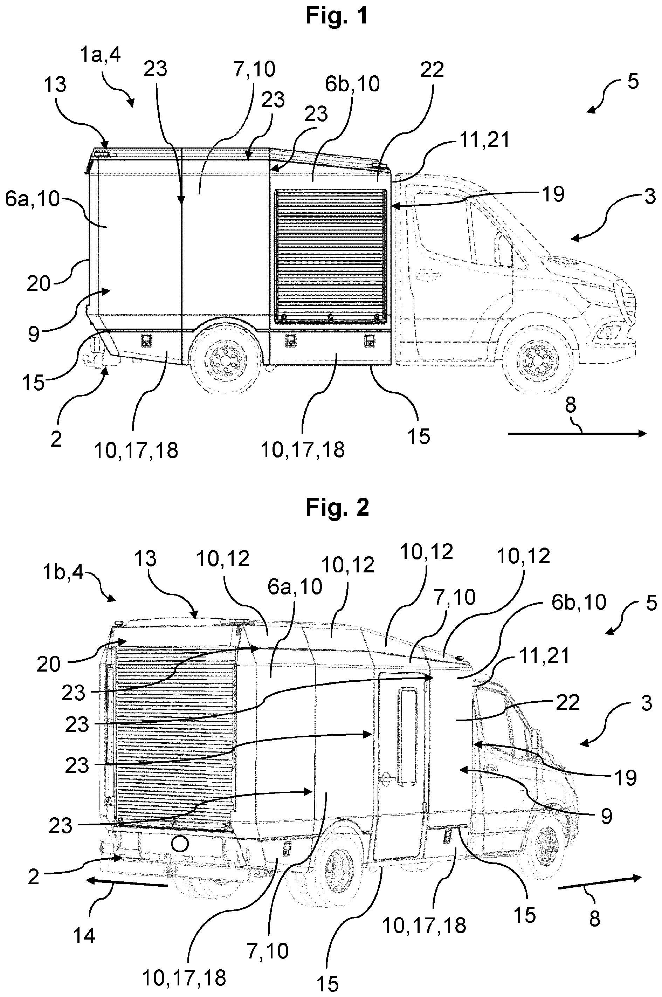

Der in Fig. 1 gezeigte Aufbau 1a ist aus mehreren Modulen 10 zusammengesetzt. Die Module 10 umfassen zwei Grundmodule 6a, 6b, welche um ein Zwischenmodul 7 angeordnet sind. Außerdem befinden sind unterhalb des Fahrgestells 2 zwei Behältermodule 18, die als Vorratsbehälter 17 ausgeführt sind.

Die Module 10 umfassen bevorzugt einen Abschnitt eines Dachs 13 und einen Abschnitt einer linken und einer rechten Seitenwand des Aufbaus 1a bzw. des Laderaums 4.

Aneinander anliegende Module 10 sind miteinander verbunden. Sie können endseitig jeweils Umbördelungen aufweisen, die flächig aneinander anliegen können und miteinander durch Befestigungsmittel wie etwa Schrauben verbunden werden können. Zwischen nebeneinander angeordneten Modulen 10 können sich Fugen 23 ausbilden. Diese können mit einem Dichtmaterial abgedichtet werden. Als Dichtmaterial kommt beispielsweise ein witterungsbeständiger vorzugsweise primerloser Klebewerkstoff in Betracht.

Dach 13, Seitenflächen und ggf. Boden sind bei den Modulen 10 versatzfrei zueinander ausgebildet. Sie schließen ohne Zwischenräume aneinander an.

Der Aufbau 1a ist auf einem Fahrgestell 2 montiert, welches eine Fahrerkabine 3 aufweist. Es ist zu sehen, wie der Aufbau 1a eine geschlossene Wandung 9 des Laderaums 4 ausbildet. Weiter weist der Aufbau 1a ein Dach 13 auf. Die Vorderseite 11 der Wandung 9 grenzt an die Fahrerkabine 3 an. Hierbei weist bevorzugt das die Vorderseite 11 ausbildende Grundmodul 6b eine Vorderwand 21 auf. Ferner ist bevorzugt ein kleiner Abstand zwischen einer Rückwand 19 der Fahrerkabine 3 und der Vorderwand 21 des Aufbaus 1a vorgesehen. Die Heckwand 20 des Aufbaus 1a schließt den Laderaum rückseitig ab.

In einem alternativen Ausführungsbeispiel kann die Vorderseite 11 auf offen sein. In diesem Fall sind die Seitenwände 22 des Grundmoduls 6b direkt an der Fahrerkabine befestigt, sodass kein Spalt verbleibt. Die Rückwand 19 der Fahrerkabine 3 auch in diesem Fall weiterhin vorhanden sein oder auch weggelassen sein. In ersten Fall ist der Laderaum vom Kabinenraum getrennt, im zweiten Fall bilden diese einen gemeinsamen Raum aus.

Das in Längsrichtung 8 gesehen zweite Grundmodul 6b weist eine Zugangsmöglichkeit in den Laderaum 4 auf, die als Rollladen ausgeführt ist.

Weiter ist gezeigt, dass die Unterseiten 15 der Grundmodule 6a, 6b und der Behältermodule 18 plan miteinander abschließen.

Das in Fig. 2 gezeigte Nutzfahrzeug 5 weist einen Aufbau 1b auf, welcher mehrere Module 10 umfasst. Die Module 10 umfassen zwei Grundmodule 6a, 6b sowie zwei Zwischenmodule 7. Außerdem ist ein Heckwandmodul 19 gezeigt, welches eine Heckwand 20 des Laderaums 4 bildet und außerdem einen Rollladen als Zugangsmöglichkeit in den Laderaum 4 umfasst. Eine weitere Zugangsmöglichkeit ist durch die Tür des in Längsrichtung 8 gesehen zweiten Zwischenmoduls 7 gegeben.

Das Dach 13 des Laderaums 4 ist aus vier verschiedenen Deckenmodulen 12 zusammengesetzt. Zudem sind zwei Behältermodule 18 angebracht, die als Vorratsbehälter 17 dienen können. Die Wandung 9 des Aufbaus 1b schließt mit der Vorderseite 11 an der Fahrerkabine 3 an.

Weiter ragt der Aufbau 1b seitlich, also in Querrichtung 14, über das Fahrgestell 2 hinaus und ragt auch teilweise bis zur Unterseite des Fahrgestells 2 hinunter. Die Unterseiten 15 der Module 10 schließen plan miteinander ab.

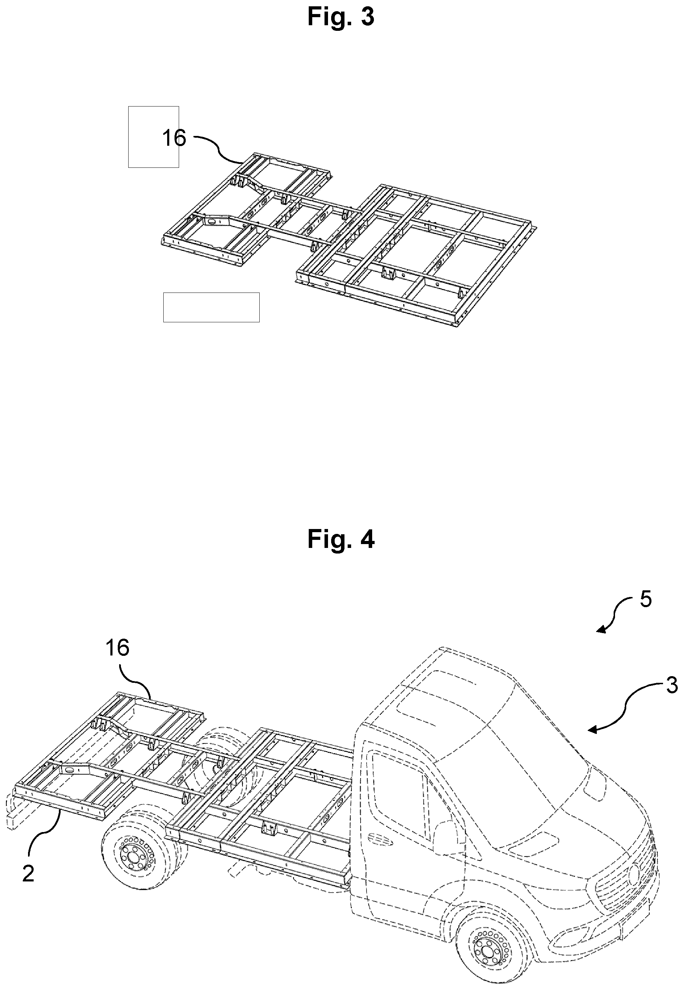

In Fig. 3 ist ein erfindungsgemäßer Befestigungsadapter 16 zu sehen. Der Befestigungsadapter 16 bildet einen Rahmen aus und weist mehrere Bohrungen auf, durch die der Befestigungsadapter 16 durch eine Schraubverbindung lösbar mit einem Fahrgestell eines Nutzfahrzeugs verbunden werden kann. Der Befestigungsadapter 16 ermöglicht die Montage der erfindungsgemäßen Module auf einer Vielzahl von unterschiedlichen Fahrgestellen.

Fig. 4 zeigt ein Nutzfahrzeug 5, auf dessen Fahrgestell 2 ein Befestigungsadapter 16 montiert ist. In einem darauffolgenden Schritt können nun die einzelnen Module nacheinander mit dem Befestigungsadapter 16 verbunden werden, sodass ein Laderaum ausgebildet werden kann. Es ist jedoch auch denkbar, dass zunächst die einzelnen Module miteinander verbunden werden und erst danach die zusammenmontierten Module auf dem Befestigungsadapter 16 verschraubt werden.

Die Erfindung betrifft insbesondere einen Bausatz für eine erste und eine zweite Variante von Aufbauten 1a, 1b für Laderäume 4 von Nutzfahrzeugen 5, wobei in beiden Varianten der jeweilige Aufbau 1 auf einem eine Fahrerkabine 3 aufweisenden Fahrgestell 2 so montierbar ist, dass ein geschlossener Laderaum 4 ausgebildet wird.

### Bezugszeichenliste

- 1: Aufbau
- 2: Fahrgestell (von 5)
- 3: Fahrerkabine (von 5)
- 4: Laderaum (definiert durch 1)
- 5: Nutzfahrzeug
- 6a: Grundmodul
- 6b: weiteres Grundmodule
- 7: Zwischenmodul
- 8: Längsrichtung
- 9: Wandung
- 10: Module
- 11: Vorderseite 8 (von 9)
- 12: Deckenmodule
- 13: Dach
- 14: Querrichtung (quer zu 8, horizontal verlaufend oder vertikal verlaufen)
- 15: Unterseite (von 10)
- 16: Befestigungsadapter
- 17: Vorratsbehälter
- 18: Behältermodul
- 19: Heckwandmodul
- 20: Heckwand (von 1)
- 21: Vorderwand (von 6b)
- 22: Seitenwand (von 6b)
- 23: Fuge

## Patentansprüche

1. **Bausatz** für mindestens eine erste und eine zweite Variante von Aufbauten (1a, 1b) für Laderäume (4) von Nutzfahrzeugen (5),
- wobei in beiden Varianten der jeweilige Aufbau (1a, 1b) auf einem eine Fahrerkabine (3) aufweisenden Fahrgestell (2) so montierbar ist, dass ein geschlossener Laderaum (4) ausgebildet wird, umfassend:
- Module (10), umfassend mehrere Grundmodule (6) und wenigstens ein Zwischenmodul (7), wobei
- in der ersten Variante die mehreren Grundmodule (6) in einer Längsrichtung (8) hintereinander anordenbar sind, wobei bezogen auf die Längsrichtung (8) benachbarte der Module (10) jeweils so miteinander fest verbindbar, insbesondere verrastbar, sind, dass die mehreren Grundmodule (6) eine seitlich und rückseitig umlaufende Wandung (9) der ersten Variante des Aufbaus (1a) bilden, wobei bei der ersten Variante die mehreren Grundmodule (6a, 6b) ein erstes Grundmodul (6a) und ein zweites Grundmodul (6b) umfassen, die direkt benachbart sind, und wobei
- in der zweiten Variante die mehreren Grundmodule (6a, 6b) und wenigstens ein Zwischenmodul (7) in einer Längsrichtung (8) hintereinander anordenbar sind, wobei benachbarte der Module (10) jeweils so miteinander fest verbindbar sind, dass die mehreren Grundmodule (6a, 6b) und das wenigstens eine Zwischenmodul (7) eine seitlich und rückseitig umlaufende Wandung (9) der zweiten Variante des Aufbaus (1b) bilden, wobei auch bei der zweiten Variante die mehreren Grundmodule (6a, 6b) ein erstes Grundmodul (6a) und ein zweites Grundmodul (6b) umfassen und dabei das wenigstens eine Zwischenmodul (7) zwischen dem ersten Grundmodul (6a) und dem zweiten Grundmodul (6b) angeordnet ist.

2. Bausatz nach dem vorangehenden Anspruch, **dadurch gekennzeichnet, dass** die Module (10) in sich formstabil ausgestaltet sind und/oder dass das jeweilige Modul (10) einen Abschnitt eines Bodens und einen Abschnitt einer linken und einer rechten Seitenwand des späteren Laderaums (4) ausbildet, insbesondere wobei der Abschnitt des Bodens fest auf dem Fahrgestell montierbar ist und/oder wobei das jeweilige Modul (10) oberseitig offen gehalten ist und ein Deckenmodul (12) mit dem jeweiligen Modul (10) so zusammensetzbar ist, dass eine umlaufende in sich geschlossene Innenwandung des späteren Laderaums (4) abschnittsweise ausbildbar ist, insbesondere wobei das jeweilige Modul (10) vorder- und/oder rückseitig offen gehalten ist.

3. Bausatz nach einem der vorangehenden Ansprüche, **dadurch gekennzeichnet, dass** bei der ersten Variante und/oder bei der zweiten Variante des Aufbaus (1a, 1b) eine Vorderseite (11) der Wandung (9) offen gehalten ist und/oder dass der jeweilige Aufbau (1a, 1b) jeweils ein, vorzugsweise baugleiches, Heckwandmodul (19) aufweist, welches eine rückseitige Heckwand (20) des jeweiligen Aufbaus (1a, 1b) ausbildet.

4. Bausatz nach einem der Ansprüche 1 bis 3, **dadurch gekennzeichnet, dass** bei der ersten Variante und/oder bei der zweiten Variante des Aufbaus (1a, 1b) ein vorderes der Module (10), insbesondere ein erstes Grundmodul (6a), eine geschlossene Vorderseite (11) der Wandung (9) ausbildet und/oder dass wenigstens eines der Module (10) einen geschlossen umlaufenden Abschnitt einer Innenwandung des späteren Laderaums (4) ausbildet.

5. Bausatz nach einem der vorangehenden Ansprüche, **dadurch gekennzeichnet, dass** der Bausatz ein oder mehrere Deckenmodule (12) aufweist, die miteinander und mit den Grundmodulen (6a, 6b) und/oder mit dem wenigstens einen Zwischenmodul (7) so miteinander fest verbindbar sind, dass die Deckenmodule (12) ein Dach (13) des Aufbaus (1a, 1b) in der zweiten oder der ersten Variante bilden, vorzugsweise wobei die Grundmodule (6a, 6b) und/oder das wenigstens eine Zwischenmodul (7) oberseitig offen gehalten sind.

6. Bausatz nach einem der vorangehenden Ansprüche, **dadurch gekennzeichnet, dass** der Bausatz wenigstens ein Modul (10) aufweist, welches in Sandwichbauweise ausgeführt ist, insbesondere wobei das Modul (10) wenigstens zwei Schichten glasfaserverstärkten Kunststoff (GFK) und wenigstens eine Schicht Polyethylen(PE)-Schaumstoff aufweist, und/oder dass im jeweiligen Aufbau (1a, 1b) die miteinander verbundenen direkt benachbarten der Module (10) jeweils an ihrer jeweiligen Unterseite (15a, 15b, 15c) plan miteinander abschließen, insbesondere ohne Stufen, vorzugsweise wobei die jeweilige Unterseite (15a, 15b) des jeweiligen Moduls (10), also insbesondere des jeweiligen Grundmoduls (6a, 6b) und/oder des wenigstens einen Zwischenmoduls (7), so flach ausgebildet ist, dass alle Unterseiten (15a, 15b) der in einem der Aufbauten (1a, 1b) verwendeten Module (10) in einer gemeinsamen Ebene liegen.

7. Bausatz nach einem der vorangehenden Ansprüche, **dadurch gekennzeichnet, dass** der Bausatz wenigstens ein Behältermodul (18) umfasst, das als Vorratsbehälter (17) dienen kann, um ein Reinigungsmedium wie beispielsweise Wasser außerhalb des Laderaums (4) aufzubewahren, wobei das wenigstens eine Behältermodul (18) über eine zum Bausatz gehörende Medienleitung fluidisch mit dem Laderaum (4) verbindbar ist, und/oder dass Flächenelemente eines, mehrerer oder jedes der Module jeweils zueinander versatzfrei ausgebildet sind.

8. Bausatz nach einem der vorangehenden Ansprüche, **dadurch gekennzeichnet, dass** der Bausatz wenigstens einen Befestigungsadapter (16) umfasst, wobei der Befestigungsadapter (16) einen Rahmen ausbildet, mit Hilfe dessen der jeweilige Aufbau (1a, 1b) auf einem Fahrgestell (2) eines Nutzfahrzeugs montierbar ist, vorzugsweise wobei der Befestigungsadapter (16) für eine zerstörungsfrei lösbare mechanische Verbindung, insbesondere eine Schraubverbindung, mit einem Fahrgestell (2) vorgesehen und entsprechend ausgestaltet ist.

9. **Baureihe** von Aufbauten (1a, 1b) für Laderäume (4) von Nutzfahrzeugen (5) in einer ersten und einer zweiten Variante, hergestellt mit einem Bausatz nach einem der vorangehenden Ansprüche, wobei
- in beiden Varianten der Aufbau (1) auf einem eine Fahrerkabine (3) aufweisenden Fahrgestell (2) so montierbar ist, dass ein geschlossener Laderaum (4) ausgebildet wird,
- in der ersten Variante mehrere Module (10) in einer Längsrichtung (8) hintereinander angeordnet sind, wobei benachbarte Module (10) jeweils so miteinander fest verbunden sind, dass die mehreren Module (10) eine seitlich und rückseitig umlaufende Wandung (9) des Aufbaus (1) bilden, wobei die mehreren Module (10) ein erstes und ein zweites Modul (10) umfassen, die benachbart sind;
- in der zweiten Variante die mehreren Module (10) und ein Zwischenmodul (7) in einer Längsrichtung (8) hintereinander angeordnet sind, wobei benachbarte Module (10) jeweils so miteinander fest verbunden sind, dass die mehreren Module (10) und das Zwischenmodul (7) eine seitlich und rückseitig umlaufende Wandung (9) des Aufbaus (1) bilden, wobei das Zwischenmodul (7) zwischen dem ersten und dem zweiten Modul (10) angeordnet ist.

10. **Montage eines Aufbaus (1),** der auf Basis eines Bausatzes gemäß einem der Ansprüche 1 bis 8 zusammengesetzt wird und der auf dem Fahrgestell (2) eines Nutzfahrzeugs (5) montiert wird und einen geschlossenen auf die Maße des Nutzfahrzeugs (5) angepassten Laderaum (4) ausbildet, insbesondere wobei das Nutzfahrzeug (5) für die Rohrreinigung, bildgestützte elektronische Rohrinspektion, Druckprüfung und/oder Rohrsanierung eingesetzt wird.

11. **Verfahren zur Montage eines Aufbaus (1),** der auf Basis eines Bausatzes gemäß einem der Ansprüche 1 bis 8 zusammengesetzt wird und auf einem Fahrgestell (2) eines Nutzfahrzeugs (5) montiert wird und zumindest im montierten Zustand einen geschlossenen auf die Maße des Nutzfahrzeugs (5) angepassten Laderaum (4) ausbildet, insbesondere wobei wenigstens ein Befestigungsadapter (16) auf dem Fahrgestell (2) verschraubt wird und nachfolgend der bereits fertig assemblierte Aufbau (1) oder ein einzelnes Modul (10) des Aufbaus (1) mit dem Befestigungsadapter (16) fest verbunden, vorzugsweise verschraubt, wird und/oder wobei
die Module (10) des Aufbaus (1) über Rastverbindungen miteinander mechanisch verbunden werden.

12. Verfahren nach dem vorangehenden Anspruch, **dadurch gekennzeichnet, dass** einzelne Module (10) nacheinander mit dem Fahrgestell (2) oder dem oder einem Befestigungsadapter (16) fest verbunden, vorzugsweise verschraubt, werden und/oder dass einzelne Module (10) zusammenmontiert mit dem Fahrgestell (2) oder dem oder einem Befestigungsadapter (16) fest verbunden, vorzugsweise verschraubt, werden.

13. **Nutzfahrzeug (5)** mit einem Aufbau (1), der mit Hilfe eines Bausatzes gemäß einem der Ansprüche 1 bis 8 zusammengesetzt wurde,
- wobei mittels des Aufbaus (1) ein geschlossener Laderaum (4) ausgebildet ist,
- wobei der Aufbau (1) auf einem Fahrgestell (2) des Nutzfahrzeugs (5) montiert ist,
- insbesondere wobei der Aufbau (1) oder wenigstens ein einzelnes Modul (10) des Aufbaus (1) seitlich über das Fahrgestell (2) hinausragt und
- insbesondere wobei der Aufbau (1) oder wenigstens ein einzelnes Modul (10) des Aufbaus (1) in das Fahrgestell (2) hinein oder, vorzugsweise außenseitig, unter das Fahrgestell (2) ragt.

14. Nutzfahrzeug (5) gemäß dem vorherigen Anspruch,
- wobei das Nutzfahrzeug (5) eine Vorrichtung umfasst, die zur Rohrreinigung, Rohrinspektion, Druckprüfung und/oder Rohrsanierung ausgestaltet ist und zumindest teilweise innerhalb des Laderaums (4) angeordnet ist,
- besonders bevorzugt wobei außerhalb des Laderaums (4) wenigstens ein Vorratsbehälter (17) angeordnet ist, über den die Vorrichtung mit einem Reinigungsmedium wie beispielsweise Wasser versorgbar ist, insbesondere wobei der wenigstens eine Vorratsbehälter unterhalb einer Unterseite (15) des Aufbaus (1), besonders bevorzugt innerhalb des Fahrgestells (2) oder seitlich davon, angeordnet ist.

15. **Serie von wenigstens zwei unterschiedlichen Nutzfahrzeugen (2),** die unterschiedliche Fahrgestelle (2) und/oder unterschiedliche Fahrerkabinen (3) aufweisen,
**dadurch gekennzeichnet, dass** jedes der Nutzfahrzeuge (2) der Serie gemäß einem der beiden vorherigen Ansprüche ausgestaltet ist.
